# EUROPÄISCHE PATENTANMELDUNG

(11) **EP 1 253 354 A2**
(43) Veröffentlichungstag der Anmeldung: **30.10.2002**
(21) Anmeldenummer: 02005175.1
(22) Anmeldetag: 08.03.2002
(51) Int. Cl.: F16H 61/02, F16H 63/42

(54) **Verfahren zur Erzeugung einer Schaltinformation und Schaltinformationsanzeige**

(30) Priorität: 27.04.2001 DE 10120713
(71) Anmelder: ROBERT BOSCH GMBH, 70442 Stuttgart (DE)
(72) Erfinder: Franz, Andreas, 70806 Kornwestheim (DE)

(57) **Zusammenfassung**

Verfahren zur Erzeugung einer Schaltinformation und Schaltinformationsanzeige für einen Fahrer eines Kraftfahrzeugs mit einem Schaltgetriebe und einer direkteinspritzenden Brennkraftmaschine, wobei die Brennkraftmaschine wenigstens in einer ersten Betriebsart (SCH), in der Kraftstoff während einer Verdichtungsphase direkt in einen Brennraum eingespritzt wird, oder in einer zweiten Betriebsart (HOM), in der Kraftstoff während einer Ansaugphase direkt in den Brennraum eingespritzt wird, betrieben wird, wobei von dem Fahrer ein Antriebsmoment angefordert wird, wobei die Schaltinformation wenigstens unter Berücksichtigung der Betriebsarten (SCH, HOM) erfolgt, die in der Lage sind, das angeforderte Moment zu erzeugen.

## Beschreibung

Die vorliegende Erfindung betrifft ein Verfahren zur Erzeugung einer Schaltinformation für einen Fahrer eines Kraftfahrzeugs mit einem Schaltgetriebe und einer direkteinspritzenden Brennkraftmaschine, wobei die Brennkraftmaschine wenigstens in einer ersten Betriebsart, wenn der Kraftstoff während einer Verdichtungsphase direkt in einen Brennraum eingespritzt wird, oder in einer zweiten Betriebsart, wenn der Kraftstoff während einer Ansaugphase direkt in den Brennraum eingespritzt wird, betrieben wird, wobei von dem Fahrer ein Antriebsmoment angefordert wird. Die Erfindung betrifft außerdem eine entsprechende Schaltinformationsanzeige für einen Fahrer eines Kraftfahrzeugs mit einem Schaltgetriebe und einer direkteinspritzenden Brennkraftmaschine.

### Stand der Technik

Aus der EP 0 888 921 A2 ist eine Steuerung für den Antriebsstrang eines Kraftfahrzeugs bekannt. Hierbei wird von einer Motorsteuerung ein Zustandssignal an eine Getriebesteuerung übermittelt, wenn eine Katalysatorregenerierung stattfindet. Auf Grund dieses Zustandssignals wird durch die Getriebesteuerung ein Schaltvorgang des Getriebes verschoben bzw. verändert. Die Katalysatorregenerierung ist notwendig, da der Motor nach der EP 0 888 921 A2 neben dem Homogenbetrieb auch in einem Magerbetrieb mit Schichtladung betrieben werden kann. Hierbei wird ein Katalysator verwendet, der die Stickoxide, die im Magerbetrieb entstehen, in begrenztem Umfang bindet. Ist die dafür vorhandene Kapazität erschöpft, muss eine Betriebsphase mit fettem Gemisch (Lambda<1) folgen, die eine Konversion der gebundenen Stickoxide in ungiftigere Bestandteile ermöglicht, d. h. der Katalysator muss regeneriert werden. Da ein Gangwechsel des automatischen Getriebes während einer Regenerationsphase ungünstige Abgasbedingungen zur Folge hätte, wird durch das von der Motorsteuerung an die Getriebesteuerung übermittelte Zustandssignal eine Gangumschaltung während der Katalysatorregenerierungsphase unterdrückt.

Aus der deutschen Patentanmeldung DE 100 14 218.4 ist ein Verfahren zur Steuerung eines automatischen Getriebes eines Kraftfahrzeugs mit einer direkteinspritzenden Brennkraftmaschine bekannt. Die direkteinspritzende Brennkraftmaschine ermöglicht es, dass während des Betriebs zwischen einer ersten Betriebsart, in der Kraftstoff während einer Verdichtungsphase, und einer zweiten Betriebsart, in der Kraftstoff während einer Ansaugphase in einen Brennraum eingespritzt wird, umgeschaltet wird. Das automatische Getriebe wird hierbei in Abhängigkeit von der Betriebsart derart gesteuert, dass die aktuell möglichen Betriebsarten der Brennkraftmaschine bei der Steuerung des automatischen Getriebes berücksichtigt werden. Es wird schließlich diejenige Betriebsart eingestellt, die am verbrauchsgünstigsten in der Lage ist, das von einem Fahrer des Kraftfahrzeugs angeforderte Moment zu erzeugen. Dies ist insbesondere deswegen sinnvoll, weil es bei einer direkteinspritzenden Brennkraftmaschine Betriebsbereiche gibt, in denen ein angefordertes Moment sowohl in einer Homogenbetriebsart als auch in einer Magerbetriebsart (Schichtbetrieb) erzeugt werden kann, wobei sich in den verschiedenen Betriebsarten unterschiedliche Kraftstoffverbräuche und Emissionswerte ergeben können.

Die DE 196 05 342 A1 offenbart ein Verfahren und eine Vorrichtung zur Anzeige einer Information zum Schalten eines Kraftfahrzeuggetriebes. Hierbei wird von einem Steuergerät eine momentane Leistungsanforderung der Arbeitsmaschine bestimmt. Im Anschluss wird ein verbrauchs- und/oder leistungsoptimierter Betriebsbereich ermittelt und als Schaltinformation dem Fahrer des Kraftfahrzeugs angezeigt.

### Vorteile der Erfindung

Ein Verfahren zur Erzeugung einer Schaltinformation für einen Fahrer eines Kraftfahrzeugs mit einem Schaltgetriebe und einer direkteinspritzenden Brennkraftmaschine, wobei die Brennkraftmaschine wenigstens in einer ersten Betriebsart, in der Kraftstoff während einer Verdichtungsphase direkt in einen Brennraum eingespritzt wird oder in einer zweiten Betriebsart, in der Kraftstoff während einer Ansaugphase direkt in dem Brennraum eingespritzt wird, betrieben wird, wobei von dem Fahrer ein Antriebsmoment angefordert wird, ist gegenüber dem Stand der Technik dadurch weitergebildet, dass die Schaltinformation wenigstens unter Berücksichtigung der Betriebsarten erfolgt, die in der Lage sind, das angeforderte Moment zu erzeugen. Diese erfindungsgemäße Verfahrungsweise hat den großen Vorteil, dass die Schaltinformationsanzeige in optimaler Weise an die möglichen Betriebsarten einer direkteinspritzenden Brennkraftmaschine angepasst wird. Dies ist insbesondere bei direkteinspritzenden Brennkraftmaschinen vorteilhaft, weil es Betriebsbereiche gibt, in denen das angeforderte Moment in verschiedenen Betriebsarten erzeugt werden kann. Besonders vorteilhaft werden prognostizierte und/oder berechnete Kraftstoffverbräuche der verschiedenen Betriebsarten, die in der Lage sind, die Momentenanforderung zu erfüllen, bei der Bestimmung der Schaltinformation berücksichtigt. Insbesondere dann, wenn die aktuelle Momentenanforderung in einer anderen Gangstufe und einer anderen Betriebsart bei geringerem Kraftstoffverbrauch erfüllt werden kann, kann besonders vorteilhaft eine Schaltinformation an den Fahrer des Kraftfahrzeugs erfolgen. Durch diese vorteilhaften Weiterbildungen erhält der Fahrer des Kraftfahrzeugs besonders zuverlässige Schaltinformationen, um das Kraftfahrzeug besonders verbrauchsgünstig zu betreiben.

Eine andere vorteilhafte Weiterbildung sieht vor, dass die Schaltinformation zusätzlich unter Berücksichtigung von Abgasemissionen der Brennkraftmaschine erfolgt, wobei insbesondere die Betriebsarten der Brennkraftmaschine berücksichtigt werden, die in der Lage sind, das angeforderte Moment zu erzeugen. Vorteilhaft erfolgt dann eine Schaltinformation an den Fahrer des Kraftfahrzeugs, wenn die Momentenanforderung in einer anderen Gangstufe, eine andere Betriebsart, bei nahezu gleichem Kraftstoffverbrauch aber geringeren Abgasemissionen erfüllt werden kann. Die letztgenannte Weiterbildung hat den Vorteil, dass die Abgasemissionen des Kraftfahrzeugs minimiert werden.

Das erfindungsgemäße Verfahren bzw. die erfindungsgemäße Vorrichtung weisen einen besonders großen Vorteil auf, wenn im fünften Gang (z. B. bei einem fünfstufigen Schaltgetriebe) wegen zu hoher Last gerade nicht mehr im Schichtbetrieb gefahren werden kann. In diesem Fall kann die Schaltinformationsanzeige den Fahrer darauf hinweisen, in den vierten Gang zurückzuschalten, der in diesem Fall bei höherer Drehzahl und der Schichtbetriebsart einen geringeren Kraftstoffverbrauch aufweist. In diesem letztgenannten Beispiel können sich bei Konstantfahrt beispielsweise auf einer Landstraße Verbrauchsvorteile von bis zu 20 oder 30 % erreichen.

Es liegt weiterhin im Rahmen des erfindungsgemäßen Verfahrens, die Prioritäten von Kraftstoffverbrauch und Abgasemissionen anders festzulegen. Beispielsweise kann den Abgasemissionen die oberste Priorität vor dem Kraftstoffverbrauch zugeordnet werden. In diesem Fall würde eine Schaltinformation an den Fahrer des Kraftfahrzeugs dann erfolgen, wenn die Momentenanforderung in einer anderen Gangstufe bei geringeren Abgasemissionen erfüllt werden kann, wobei das zweitrangige Kriterium (Kraftstoffverbrauch) beispielsweise bis zu einem bestimmbaren Schwellenwert unberücksichtigt bleibt.

Eine Schaltinformationsanzeige für einen Fahrer eines Kraftfahrzeugs mit einem Schaltgetriebe und einer direkteinspritzenden Brennkraftmaschine, wobei die Brennkraftmaschine wenigstens in einer ersten Betriebsart, in der Kraftstoff während einer Verdichtungsphase direkt in einen Brennraum eingespritzt wird, oder in einer zweiten Betriebsart, in der Kraftstoff während einer Ansaugphase direkt in den Brennraum eingespritzt wird, betreibbar ist, wobei von dem Fahrer ein Antriebsmoment anforderbar ist, ist gegenüber dem Stand der Technik dadurch weitergebildet, dass die Schaltinformationsanzeige wenigstens unter Berücksichtigung der Betriebsarten ansteuerbar ist, die in der Lage sind, das angeforderte Moment zu erzeugen. Die erfindungsgemäße Schaltinformationsanzeige bietet den großen Vorteil der optimalen Anpassung an die möglichen Betriebsarten einer direkteinspritzenden Brennkraftmaschine.

Beschreibung von Ausführungsbeispielen
- Figur 1: zeigt ein Ausführungsbeispiel einer erfindungsgemäßen Schaltinformationsanzeige für einen Fahrer eines Kraftfahrzeugs und
- Figur 2: zeigt ein Ausführungsbeispiel eines erfindungsgemäßen Verfahrens zur Erzeugung einer Schaltinformation für einen Fahrer eines Kraftfahrzeugs.

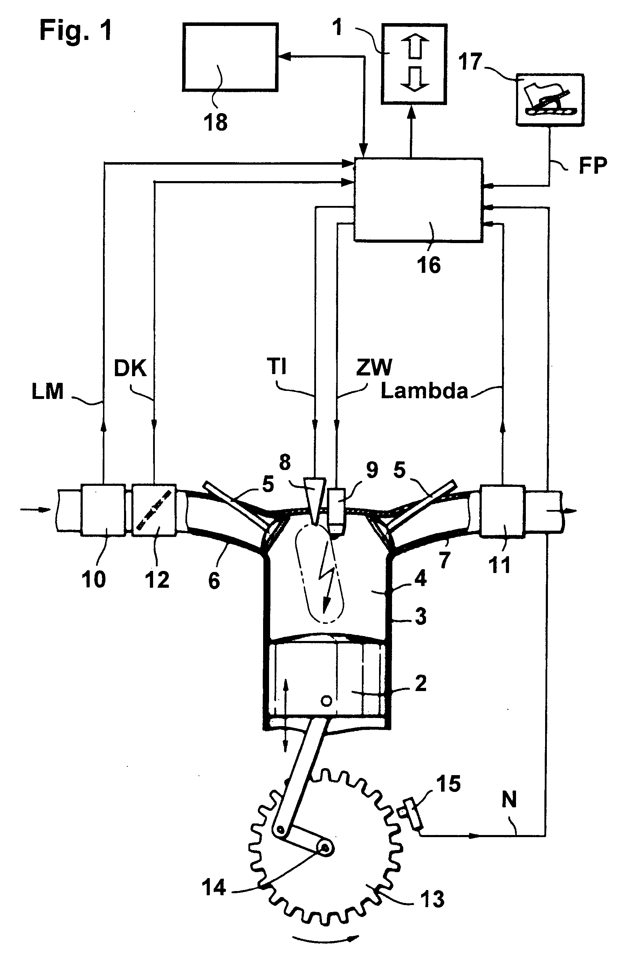

In der Figur 1 ist eine Brennkraftmaschine mit einer erfindungsgemäßen Schaltinformationsanzeige 1 dargestellt. Bei der Brennkraftmaschine ist ein Kolben 2 in einem Zylinder 3 hin- und herbewegbar. Der Zylinder 3 ist mit einem Brennraum 4 versehen, an den über Ventile 5 ein Ansaugrohr 6 und ein Abgasrohr 7 angeschlossen sind. Des Weiteren sind in dem Brennraum ein mit einem Signal TI ansteuerbares Einspritzventil 8 und eine mit einem Signal ZW ansteuerbare Zündkerze 9 verbunden. Die Signale TI und ZW werden hierbei von einem Steuergerät 16 an das Einspritzventil 8 bzw. die Zündkerze 9 übertragen. Es ist ersichtlich, dass der Kraftstoff von dem Einspritzventil 8 direkt in den Brennraum 4 eingespritzt wird. Die Anzahl der in der Brennkraftmaschine vorhandenen Zylinder ist für die Ausführung der Erfindung unerheblich.

Das Ansaugrohr 6 ist mit einem Luftmassensensor 10 und das Ansaugrohr 7 mit einem Lambdasensor 11 versehen. Der Luftmassensensor 10 misst die Luftmasse der dem Ansaugrohr 6 zugeführten Frischluft und erzeugt in Abhängigkeit davon ein Signal LM. Der Lambdasensor misst den Sauerstoffgehalt des Abgases in dem Abgasrohr 7 und erzeugt in Abhängigkeit davon ein Signal Lambda. Die Signale des Luftmassensensors 10 und des Lambdasensors 11 werden dem Steuergerät 16 zugeführt. Das Abgasrohr 7 kann über eine hier nicht dargestellte Abgasrückführungsleitung mit dem Ansaugrohr 6 verbunden sein. Die Steuerung der Abgasrückführung kann beispielsweise über ein vom Steuergerät 16 ansteuerbares Abgasrückführventil erfolgen.

In dem Ansaugrohr 6 ist eine Drosselklappe 12 untergebracht, deren Drehstellung mittels eines Signals DK einstellbar ist, das vom Steuergerät 16 übertragen wird. Gleichzeitig erfolgt von der Drosselklappe 12 eine Rückmeldung der Drosselklappenstellung an das Steuergerät 16.

In einer ersten Betriebsart, dem Schichtbetrieb (SCH) der Brennkraftmaschine, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird.

In einer zweiten Betriebsart, dem Homogenbetrieb (HOM) der Brennkraftmaschine, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im wesentlichen gleichmäßig verteilt. Danach wird das Kraftstoff-/Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb (SCH) wie auch im Homogenbetrieb (HOM) wird durch den angetriebenen Kolben eine Kurbelwelle 14 in eine Drehbewegung versetzt, über die letztendlich die Räder des Kraftfahrzeugs angetrieben werden. Auf der Kurbelwelle 14 ist ein Zahnrad 13 angeordnet, dessen Zähne von einem unmittelbar gegenüber angeordneten Drehzahlsensor 15 abgetastet werden. Der Drehzahlsensor 15 erzeugt ein Signal, aus dem die Drehzahl N der Kurbelwelle 14 ermittelt wird und übermittelt dieses Signal N an das Steuergerät 16.

Die im Schichtbetrieb und im Homogenbetrieb von dem Einspritzventil 8 in den Brennraum 4 eingespritzte Kraftstoffmasse wird von dem Steuergerät 16 insbesondere im Hinblick auf einen geringen Kraftstoffverbrauch und/oder eine geringe Schadstoffentwicklung gesteuert und/oder geregelt.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambdasensor 11 und dem Drehzahlsensor 15 verbunden. Des Weiteren ist das Steuergerät 16 mit einem Fahrpedalsensor 17 verbunden, der ein Signal FP erzeugt, das die Stellung eines von einem Fahrer betätigbaren Fahrpedals und damit das von dem Fahrer angeforderte Moment angibt. Dem Steuergerät 16 wird weiterhin von einem Schaltgetriebe 18 eine Information der derzeitigen Gangstufe zugeführt. Aus den zugeführten Daten werden im Steuergerät 16 weitere Signale erzeugt, die somit ebenfalls dem Steuergerät vorliegen. Diese weiteren Signale sind beispielsweise die Einspritzzeit TI, der Zündwinkel ZW, die Drosselklappenstellung DK und eine Information über die in Figur 1 nicht dargestellte Abgasrückführrate. Weiterhin können dem Steuergerät 16 Daten über den Saugrohrdruck und die Fahrzeugeigengeschwindigkeit zugeführt werden. Eine weitere Information, die in dem Steuergerät 16 vorliegt, ist die aktuelle Betriebsart, mit der die Brennkraftmaschine angesteuert wird.

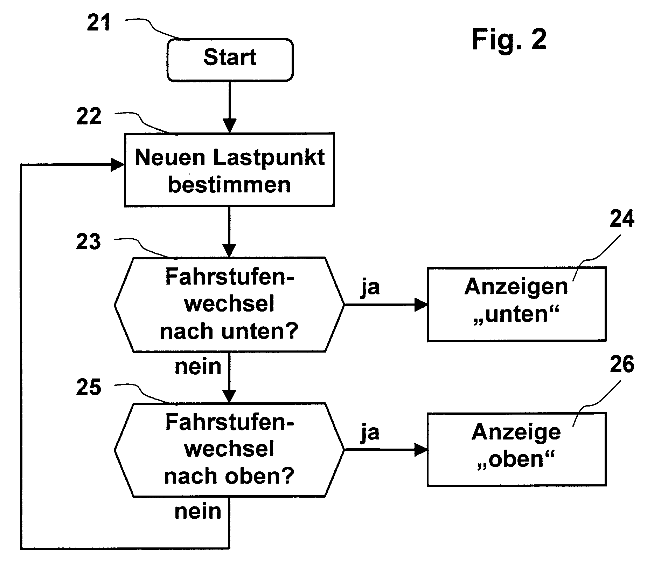

Aus all den im Steuergerät 16 vorliegenden Informationen und Daten wird erfindungsgemäß die Ansteuerung bzw. das Ansteuersignal für die Schaltinformationsanzeige 1 erzeugt. Hierbei wird erfindungsgemäß jede Betriebsart berücksichtigt, die derzeit in der Lage ist, das vom Fahrer angeforderte Moment zu erzeugen. Im Rahmen der Offenbarung wird vereinfachend nur von einem vom Fahrer angeforderten Moment gesprochen. Dem Fachmann auf dem Gebiet der Momentensteuerung ist in diesem Moment klar, dass noch Momentenverluste durch Ladungswechsel und Reibung, durch Nebenaggregate, durch Kupplungsverluste und Übersetzung sowie durch Getriebeverluste und Übersetzung berücksichtigt werden müssten. Das konkrete Verfahren, das im Rahmen der Ansteuerung der Schaltinformationsanzeige in dem Steuergerät 16 abläuft, wird im Rahmen der folgenden Figur 2 erläutert.

Figur 2 zeigt ein erfindungsgemäßes Verfahren zur Erzeugung einer Schaltinformation für einen Fahrer eines Kraftfahrzeugs. In einem Schritt 21 startet das erfindungsgemäße Verfahren. In einem Schritt 22, der sich an den Schritt 21 anschließt, wird im Steuergerät 16 der neue Lastpunkt der Brennkraftmaschine bestimmt, der sich bei einem Fahrstufenwechsel nach oben oder nach unten einstellen würde. In Abhängigkeit von diesem hypothetischen Lastpunkt werden im Steuergerät 16 diejenigen Betriebsarten der direkteinspritzenden Brennkraftmaschine berücksichtigt, die in der Lage sind, den Lastpunkt auszuführen. Hierzu sind in einem Speicher des Steuergerätes 16 betriebsartenindividuelle Kennfelder abgelegt. Theoretisch sind selbstverständlich auch Fahrstufenwechsel um mehrere Stufen möglich, was von den Rechenkapazitäten des Steuergerätes 16 und den im Speicher abgelegten Kennfeldern abhängig ist. Nachdem von dem Steuergerät 16 die möglichen Betriebsarten für den neuen hypothetischen Lastpunkt bestimmt worden sind, kann diejenige Betriebsart durch das Steuergerät 16 ermittelt werden, die in dem hypothetischen Lastpunkt den geringsten Kraftstoffverbrauch und/oder die geringsten Abgasemissionen aufweist (entsprechend im Steuergerät 16 abgelegter Kennfelder). Sind die hypothetischen Kraftstoffverbräuche der neuen Lastpunkte bestimmt, kann im Steuergerät 16 verglichen werden, ob sich durch den neuen Lastpunkt, der sich in einer anderen Fahrstufe als der aktuelle ergeben würde, ein geringerer Kraftstoffverbrauch und/oder eine geringere Abgasemission ergibt. Wird hierbei festgestellt, dass sich in einer anderen Gangstufe ein geringerer Kraftstoffverbrauch oder beispielsweise ein gleicher Kraftstoffverbrauch bei geringeren Abgasemissionen ergibt, so wird diese Information vom Schritt 22 zunächst an einen Schritt 23 übergeben. Im Schritt 23 wird überprüft, ob vom Steuergerät 16 ein Fahrstufenwechsel nach unten empfohlen wird. Ist dies der Fall, schließt sich an den Schritt 23 die Ansteuerung der Anzeige 1 im Schritt 24 an, mit der die Schaltinformationsanzeige 1 derart angesteuert wird, dass sie dem Fahrer des Kraftfahrzeugs die Schaltempfehlung "runterschalten" bzw. Gangstufe erniedrigen signalisiert. Wird im Schritt 23 hingegen festgestellt, dass vom Steuergerät kein Fahrstufenwechsel nach unten empfohlen wird, wird zum Schritt 25 übergegangen, indem überprüft wird, ob vom Steuergerät 16 ein Fahrstufenwechsel nach oben empfohlen wird. Ist dies der Fall, schließt sich an den Schritt 25 der Schritt 26 an, der analog zu Schritt 24 abläuft, jedoch die Schaltinformationsanzeige mit der Schaltempfehlung "hochschalten" bzw. Gangstufe erhöhen hervorruft. Falls sich im Schritt 25 herausgestellt hat, dass vom Steuergerät 16 auch kein Fahrstufenwechsel nach oben empfohlen worden ist, fährt das Verfahren wiederum mit dem Schritt 22 fort, indem der nächste neue hypothetische Lastpunkt bestimmt wird.

Es liegt weiterhin im Rahmen des erfindungsgemäßen Verfahrens, dass neue Lastpunkte bestimmt werden, während die Schaltinformationsanzeige angesteuert ist und der Fahrer des Kraftfahrzeugs noch keinen Fahrstufenwechsel vorgenommen hat. Dies ist deshalb besonders wichtig, da sich in der Zwischenzeit die Betriebsbedingungen verändern können, so dass eine Schaltinformationsanzeige nicht mehr sinnvoll ist und die Anzeige 1 zurückgesetzt werden muss (bevor der Fahrer des Kraftfahrzeugs einen Gangwechsel vorgenommen hat). Um ein zu häufiges aktivieren und deaktivieren ("flackern") der Schaltinformationsanzeige zu vermeiden, kann die Ansteuerung der Schaltinformationsanzeige vorteilhaft dahingehend weitergebildet werden, dass eine Ansteuerung in Abhängigkeit davon erfolgt, dass der neue Lastpunkt vorgebbare Schwellenwerte mit Blick auf die Betriebsartengrenzen der direkteinspritzenden Brennkraftmaschine berücksichtigt. Weiterhin können die Drehzahlgrenzen der einzelnen Gangstufen berücksichtigt werden. Mit anderen Worten: Es wird nur dann eine Schaltempfehlung an den Fahrer des Kraftfahrzeugs signalisiert, wenn in der empfohlenen Gangstufe wenigstens eine bestimmte Zeit gefahren werden kann.

Ein Schaltgetriebe im Sinne des erfindungsgemäßen Verfahrens und der erfindungsgemäßen Vorrichtung ist beispielsweise ein manuelles Schaltgetriebe oder auch ein halbautomatisches Schaltgetriebe, welches auf einen Tasten- oder Hebeldruck hin einen Fahrstufenwechsel durchführt.

## Patentansprüche

1. Verfahren zur Erzeugung einer Schaltinformation für einen Fahrer eines Kraftfahrzeugs mit einem Schaltgetriebe und einer direkteinspritzenden Brennkraftmaschine, wobei die Brennkraftmaschine wenigstens in einer ersten Betriebsart (SCH), in der Kraftstoff während einer Verdichtungsphase direkt in einen Brennraum eingespritzt wird, oder in einer zweiten Betriebsart (HOM), in der Kraftstoff während einer Ansaugphase direkt in den Brennraum eingespritzt wird, betrieben wird, wobei von dem Fahrer ein Antriebsmoment angefordert wird, **dadurch gekennzeichnet, dass** die Schaltinformation wenigstens unter Berücksichtigung der Betriebsarten (SCH, HOM) erfolgt, die in der Lage sind, das angeforderte Moment zu erzeugen.

2. Verfahren nach Anspruch 1, **dadurch gekennzeichnet, dass** prognostizierte und/oder berechnete Kraftstoffverbräuche der verschiedenen Betriebsarten, die in der Lage sind, die Momentenanforderung zu erfüllen, bei der Bestimmung der Schaltinformation berücksichtigt werden.

3. Verfahren nach Anspruch 1 oder 2, **dadurch gekennzeichnet, dass** dann eine Schaltinformation an den Fahrer des Kraftfahrzeugs erfolgt, wenn die Momentenanforderung in einer anderen Gangstufe und einer anderen Betriebsart bei geringerem Kraftstoffverbrauch erfüllt werden kann.

4. Verfahren nach Anspruch 1 oder 2, **dadurch gekennzeichnet, dass** die Schaltinformation zusätzlich unter Berücksichtigung von Abgasemissionen der Brennkraftmaschine erfolgt, die in den Betriebsarten (SCH, HOM) entstehen, die in der Lage sind, das angeforderte Moment zu erzeugen.

5. Verfahren nach Anspruch 4, **dadurch gekennzeichnet, dass** dann eine Schaltinformation an den Fahrer des Kraftfahrzeugs erfolgt, wenn die Momentenanforderung in einer anderen Gangstufe, einer anderen Betriebsart, bei nahezu gleichem Kraftstoffverbrauch und bei geringeren Abgasemissionen erfüllt werden kann.

6. Schaltinformationsanzeige für einen Fahrer eines Kraftfahrzeugs mit einem Schaltgetriebe und einer direkteinspritzenden Brennkraftmaschine, wobei die Brennkraftmaschine wenigstens in einer ersten Betriebsart (SCH), in der Kraftstoff während einer Verdichtungsphase direkt in einen Brennraum eingespritzt wird, oder in einer zweiten Betriebsart (HOM), in der Kraftstoff während einer Ansaugphase direkt in den Brennraum eingespritzt wird, betreibbar ist, wobei von dem Fahrer ein Antriebsmoment anforderbar ist, **dadurch gekennzeichnet, dass** die Schaltinformationsanzeige wenigstens unter Berücksichtigung der Betriebsarten (SCH, HOM) ansteuerbar ist, die in der Lage sind, das angeforderte Moment zu erzeugen.
